# EUROPÄISCHE PATENTSCHRIFT

(11) **EP 2 129 943 B1**
(45) Veröffentlichungstag und Bekanntmachung des Hinweises auf die Patenterteilung: **27.04.2011**
(21) Anmeldenummer: 08717520.4
(22) Anmeldetag: 07.03.2008
(51) Int. Cl.: F16H 61/02

(54) **STEUERUNGSVORRICHTUNG EINES AUTOMATISIERTEN STUFENSCHALTGETRIEBES**
CONTROL DEVICE OF A STEPPED AUTOMATIC TRANSMISSION
DISPOSITIF DE COMMANDE D'UNE BOITE DE VITESSES AUTOMATIQUE ETAGEE

(30) Priorität: 30.03.2007 DE 102007015355
(43) Veröffentlichungstag der Anmeldung: 09.12.2009
(73) Patentinhaber: ZF Friedrichshafen AG, 88038 Friedrichshafen (DE)
(72) Erfinder: WOLFGANG, Werner, 88213 Ravensburg (DE); WÜRTHNER, Maik, 88048 Friedrichshafen (DE); SAUTER, Ingo, 88074 Meckenbeuren (DE)
(86) Internationale Anmeldenummer: PCT/EP2008/052773
(87) Internationale Veröffentlichungsnummer: WO 2008/119617

(56) Entgegenhaltungen:
- EP-A- 0 635 630
- WO-A-87/06975
- WO-A-95/34437
- WO-A-2007/054249
- DE-A1- 4 111 949
- DE-A1- 4 128 922
- DE-A1- 4 436 371
- DE-A1- 19 963 468
- DE-C1- 19 506 296
- FR-A- 2 805 362
- GB-A- 2 357 859
- US-A1- 2002 116 093

## Beschreibung

Die Erfindung betrifft eine Steuerungsvorrichtung eines automatisierten Stufenschaltgetriebes, das in einem Antriebsstrang eines Kraftfahrzeugs im Kraftfluss zwischen einem Antriebsmotor und dem Achsdifferenzial einer Antriebsachse oder einem Verteilergetriebe angeordnet ist und ein elektronisches Getriebesteuergerät mit einem Datenspeicher umfasst, auf dem mehrere Steuerdatensätze abgespeichert sind, wobei jeweils einer der Steuerdatensätze manuell und/oder automatisch auswählbar und zur Steuerung des Stufenschaltgetriebes aktivierbar ist.

Aus der GB-A-2 357 859 ist eine Vorrichtung mit den Merkmalen des Oberbegriffes des Anspruchs 1 bekannt.

Kraftfahrzeuge werden zunehmend mit automatisierten Stufenschaltgetrieben, wie automatisierten Schaltgetrieben, automatisierten Doppelkupplungsgetrieben und Planetengetriebeautomaten ausgerüstet, da der Fahrer hierdurch weitgehend von der Ablaufsteuerung von Anfahr- und Schaltvorgängen entlastet ist und sich besser auf die Überwachung des Verkehrsgeschehens konzentrieren kann. Neben einer Erhöhung des Fahrkomforts und der Fahrsicherheit kann zudem durch die Verwendung entsprechender, auf verschiedene Betriebssituationen, wie eine Fahrt mit hoher oder niedriger Beladung, eine Fahrt im Gebirge oder im Flachland und/oder auf verschiedene Fahrweisen, wie eine auf eine hohe Fahrdynamik abzielende sportliche Fahrweise oder eine auf einen geringen Kraftstoffverbrauch und eine geringe Umweltbelastung abzielende ökonomische Fahrweise, hin optimierte Steuerdatensätze, bei denen es sich im Wesentlichen um Schaltprogramme bzw. Schaltkennfelder handelt, auch ein der Fahrsituation und dem Fahrerwunsch entsprechendes Schaltverhalten des Stufenschaltgetriebes erreicht werden.

Aus älteren, mit Planetengetriebeautomaten versehenen Personenkraftfahrzeugtypen ist es bekannt, dass der Fahrer durch die Betätigung eines beispielsweise auf der Mittelkonsole nahe des Wählhebels angeordneten Kippschalters zwischen einem Eco-Schaltprogramm mit relativ niedrigen Schaltdrehzahlen und einem Sport-Schaltprogramm mit relativ hohen Schaltdrehzahlen wechseln kann. Hierdurch wird innerhalb des Getriebesteuergerätes zwischen zwei unterschiedlichen Steuerdatensätzen mit entsprechenden Schaltkennfeldern umgeschaltet. Bei jüngeren Personenkraftfahrzeugtypen, die mit einem automatisierten Schaltgetriebe oder mit einem Planetengetriebeautomaten versehen sind, erfolgt die Umschaltung zwischen mehreren Schaltprogrammen teilweise auch automatisiert. Hierzu kann z.B. die Dynamik der fahrerseitigen Betätigung von Bedienungselementen, wie des Fahrpedals, des Bremspedals und des Lenkrades und/oder die Dynamik der Fahrzeugbewegung, wie die Längsbeschleunigung, die Längsverzögerung und die Querbeschleunigung des Kraftfahrzeugs sensorisch erfasst und zur Bestimmung eines Fahrertyps ausgewertet werden, worauf dann automatisch auf ein dem ermittelten Fahrertyp bzw. dem Fahrverhalten des Fahrers am besten entsprechendes Schaltprogramm umgeschaltet wird.

Ein entsprechendes Verfahren zur Steuerung eines automatisierten Schaltgetriebes ist aus der DE 43 12 717 A1 bekannt. In diesem bekannten Verfahren ist vorgesehen, dass aus fahrerspezifischen und/oder fahrdynamischen Kenngrößen, wie der Wählhebelaktivität, dem Drehmomentüberschuss des Antriebsmotors, dem Kurvenradius und der Bremsaktivität, eine erste, die Fahraktivität repräsentierende Kenngröße bestimmt wird, dass Betriebssituationen, wie Stadtverkehr, Anhängerbetrieb und Bergfahrt erkannt und daraus eine zweite, den aktuellen Fahrzustand repräsentierende Kenngröße bestimmt wird, und dass mittels der beiden ermittelten Kenngrößen eines von mehreren Schaltkennfeldern ausgewählt und zur Durchführung von Übersetzungsänderungsvorgängen aktiviert wird.

Eine diesbezügliche Steuerungsvorrichtung eines automatischen Fahrzeuggetriebes ist in der DE 199 39 938 A1 beschrieben. Diese bekannte Steuerungsvorrichtung umfasst außer Mitteln zur Erfassung des Betriebszustands des Antriebsmotors und des gesamten Kraftfahrzeugs auch Mittel zur Erfassung der Fahrbahnneigung der aktuell befahrenen Straße, die zur Bestimmung eines Neigungsparameters dienen. Zusätzlich ist ein Navigationssystem vorgesehen, mittels dem die aktuelle Position des Kraftfahrzeugs und die dort vorliegende Fahrbahnneigung, also die Steigung oder das Gefälle der befahrenen Straße, ermittelt wird, wobei die dadurch ermittelte Fahrbahnneigung zur Korrektur eines Neigungsparameters verwendet wird. Auf der Basis des korrigierten Neigungsparameters wird eines von mehreren Schaltprogrammen ausgewählt und zur Steuerung des Fahrzeuggetriebes aktiviert.

Allen bekannten Vorrichtungen und Verfahren zur Steuerung automatisierter Stufenschaltgetriebe ist gemeinsam, dass die verfügbaren Steuerungsprogramme bzw. Schaltkennfelder auf die jeweils vorliegende Fahrzeugkonfiguration beschränkt sind, die durch die Komponenten des Antriebsstrangs sowie durch die Bauart und den Einsatzzweck des Kraftfahrzeugs gegeben ist. Besonders im Nutzfahrzeugbereich ist es aber üblich, eine Getriebebaureihe in unterschiedlichen Ausführungen, z.B. mit zehn, zwölf oder sechzehn Gängen und gegebenenfalls in einer "Directdrive"- Ausführung und einer "Overdrive"-Ausführung anzubieten, und diese Varianten, je nach Einsatzzweck und Kundenwunsch, in Kombination mit unterschiedlichen Antriebsmotoren und unterschiedlichen Antriebsachsen zu verwenden. Dies setzt jedoch voraus, dass die jeweils passenden Schaltprogramme bzw. Schaltkennfelder schon vor der Auslieferung des Stufenschaltgetriebes an einen Kunden in dem Datenspeicher des Getriebesteuergerätes abgespeichert werden, wodurch die Verwendbarkeit des Stufenschaltgetriebes stark eingeschränkt ist.

Alternativ dazu können die passenden Schaltprogramme bzw. Schaltkennfelder auch am Ende der Fertigungslinie eines Fahrzeugherstellers auf den Datenspeicher des Steuergerätes aufgespielt und abgespeichert werden. Dies stellt jedoch einen relativ hohen Aufwand dar und birgt die Gefahr einer Verwechslung eines oder mehrerer Schaltkennfelder in sich. Ebenfalls müssen im späteren Einsatz des Kraftfahrzeugs beim Kunden die vorhandenen Schaltprogramme bzw. Schaltkennfelder dann gelöscht und die passenden Schaltkennfelder aufgespielt und abgespeichert werden, wenn eine Komponente des Antriebsstrangs geändert wird. Dies kann z.B. dann der Fall sein, wenn in einer Reparaturwerkstatt ein vorhandenes Ersatzgetriebe, dessen Schaltkennfelder auf die Kombination mit einem bestimmten Antriebsmotor und/oder mit einer bestimmten Antriebsachse ausgelegt sind, in einen LKW oder einen Omnibus eingebaut werden soll, der mit einem schwächeren oder stärkeren Antriebsmotor oder mit einer anders übersetzten Antriebsachse ausgerüstet ist.

Angesichts der Nachteile der bekannten Vorrichtungen und Verfahren liegt der Erfindung die Aufgabe zugrunde, eine Steuerungsvorrichtung eines automatisierten Stufenschaltgetriebes vorzuschlagen, mit der eine kostengünstigere und sicherere Versorgung des Getriebesteuergerätes mit den jeweils passenden Steuerdatensätzen und ein flexiblerer Einsatz des betreffenden Stufenschaltgetriebes möglich ist.

Gemäß den Merkmalen des Hauptanspruchs wird diese Aufgabe gelöst durch eine Steuerungsvorrichtung eines automatisierten Stufenschaltgetriebes, das in einem Antriebsstrang eines Kraftfahrzeugs im Kraftfluss zwischen einem Antriebsmotor und dem Achsdifferenzial einer Antriebsachse oder einem Verteilergetriebe angeordnet ist und ein elektronisches Getriebesteuergerät mit einem Datenspeicher umfasst, auf dem mehrere Steuerdatensätze abgespeichert sind, wobei jeweils einer der Steuerdatensätze manuell und/oder automatisch auswählbar und zur Steuerung des Stufenschaltgetriebes aktivierbar ist. Außerdem ist bei dieser Steuerungsvorrichtung vorgesehen, dass mehrere Gruppen von Steuerdatensätzen permanent auf dem Datenspeicher abgespeichert sind, wobei jede Gruppe von Steuerdatensätzen jeweils für eine andere Antriebsstrangkonfiguration und/oder einen anderen Einsatzzweck des Kraftfahrzeugs ausgelegt ist, und dass die für die vorliegende Antriebsstrangkonfiguration und/oder den vorliegenden Einsatzzweck des Kraftfahrzeugs ausgelegte Gruppe von Steuerdatensätzen für eine Nutzung freigeschaltet und die übrigen Gruppen von Steuerdatensätzen für eine Nutzung gesperrt sind.

Vorteilhafte Ausgestaltungen und Weiterbildungen der erfindungsgemäßen Steuerungsvorrichtung sind Gegenstand der Unteransprüche.

Dadurch, dass der Datenspeicher schon die für verschiedene Antriebsstrangkonfigurationen und verschiedene Einsatzzwecke des Kraftfahrzeugs ausgelegten Gruppen von Steuerdatensätzen enthält, muss für eine Aktivierung der passenden Gruppe von Steuerdatensätzen nur noch die richtige der vorhandenen Gruppen von Steuerdatensätzen freigeschaltet und somit aktiviert werden. Da elektronische Speicherbausteine keinen wesentlichen Kostenfaktor mehr darstellen, ist das Mitführen ungenutzter Steuerdatensätze weitgehend kostenneutral. Vielmehr überwiegen die Vorteile, die in einer höheren Flexibilität des Einsatzes des Stufenschaltgetriebes und in einer kostengünstigeren sowie risikoärmeren Aktivierung der passenden Steuerdatensätze bestehen.

So kann beispielsweise ein Lastkraftwagen-Hersteller verschiedene Varianten einer Getriebebaureihe in Kombination mit unterschiedlich leistungsstarken Antriebsmotoren und verschieden übersetzten Antriebsachsen verwenden, wobei der konkrete Einsatzzweck des jeweiligen Stufenschaltgetriebes zunächst offen ist und erst durch dessen Einbau in das Fahrzeug, also die Kombination mit einem bestimmten Antriebsmotor und einer bestimmten Antriebsachse, festgelegt wird.

Die für die betreffende Antriebsstrangkonfiguration und den Einsatzzweck des Lastkraftwagen ausgelegte Gruppe von Steuerdatensätzen wird dann am Ende der Produktionslinie freigeschaltet und damit aktiviert, welches auch als statische Umschaltung zwischen Steuerdatensätzen bezeichnet werden kann, da es bei außer Betrieb befindlichem Kraftfahrzeug erfolgt. Auf die gleiche Art und Weise kann auch ein Austauschgetriebe, das mit verschiedenen Antriebsmotoren und Antriebsachsen kombinierbar ist, vor oder nach dem Einbau in ein Kraftfahrzeug durch das Freischalten der entsprechenden Gruppe von Steuerdatensätzen von Servicepersonal konfiguriert werden.

Die Auswahl und Freischaltung der für die vorliegende Antriebsstrangkonfiguration und/oder den vorliegenden Einsatzzweck des Kraftfahrzeugs ausgelegten Gruppe von Steuerdatensätzen kann prinzipiell manuell und/oder automatisch erfolgen. Demzufolge können sowohl Mittel für eine manuelle als auch Mittel für eine automatische Auswahl und Freischaltung der für die vorliegende Antriebsstrangkonfiguration und/oder den vorliegenden Einsatzzweck des Kraftfahrzeugs ausgelegte Gruppe von Steuerdatensätzen und für eine Sperrung der übrigen Gruppen von Steuerdatensätzen vorgesehen sein.

Für eine manuelle, also von Montage- oder Servicepersonal durchführbare Auswahl und Freischaltung der passenden Gruppe von Steuerdatensätzen ist dem Datenspeicher bevorzugt ein nicht flüchtiger programmierbarer Adressdatenspeicher (EPROM) zugeordnet, in dem die Speicheradressen der Steuerdatensätze der ausgewählten und freizuschaltenden Gruppe von Steuerdatensätzen abspeicherbar sind, wobei das Abspeichern der betreffenden Speicheradressen über ein anschließbares Bediengerät, wie z.B. einen Laptop, erfolgen kann.

Alternativ dazu kann für eine manuelle Konfiguration der Steuerungssoftware dem Datenspeicher auch eine Anordnung mehrerer Steckkontakte zugeordnet sein, bei der die Speicheradressen der Steuerdatensätze der ausgewählten und freizuschaltenden Gruppe von Steuerdatensätzen durch die Anordnung von Steckbrücken einstellbar sind.

Des Weiteren kann hierzu dem Datenspeicher auch eine Anordnung mehrerer Mikroschalter zugeordnet sein, bei der die Speicheradressen der Steuerdatensätze der ausgewählten und freizuschaltenden Gruppe von Steuerdatensätzen über die Schalterstellungen der Mikroschalter einstellbar sind.

Für eine automatische Auswahl und Freischaltung der passenden Gruppe von Steuerdatensätzen sind zum einen Mittel für eine automatische Erfassung der vorliegenden Antriebsstrangkonfiguration und/oder des vorliegenden Einsatzzwecks des Kraftfahrzeugs, wie z.B. entsprechende Sensoren, sowie eine Funktion des Getriebesteuergerätes erforderlich, mit der bei einer Inbetriebnahme des Kraftfahrzeugs die vorliegende Antriebsstrangkonfiguration und/oder der vorliegende Einsatzzweck des Kraftfahrzeugs ermittelbar und die dafür ausgelegte Gruppe von Steuerdatensätzen automatisch auswählbar und freischaltbar ist.

Aus der manuell oder automatisch ausgewählten und freigeschalteten Gruppe von Steuerdatensätzen muss jeweils ein für die aktuelle Betriebssituation des Kraftfahrzeugs und/oder die aktuelle Betriebsanforderung des Fahrers ausgelegter Steuerdatensatz ausgewählt und aktiviert werden, was auch als dynamische Umschaltung zwischen Steuerdatensätzen bezeichnet werden kann, da dies im Allgemeinen während des Betriebs des Kraftfahrzeugs erfolgt.

Die entsprechende Auswahl und Aktivierung eines passenden Steuerdatensatzes kann manuell erfolgen, wozu Mittel für eine manuelle Auswahl und Aktivierung des für die aktuelle Betriebssituation des Kraftfahrzeugs und/oder die aktuelle Betriebsanforderung des Fahrers ausgelegten Steuerdatensatzes, wie vom Fahrer betätigbare Schalter oder mit Bedienungselementen des Kraftfahrzeugs gekoppelte Schalter oder Sensoren, vorgesehen sind.

Die Auswahl und Aktivierung eines passenden Steuerdatensatzes kann aber auch automatisch erfolgen, wozu Mittel für eine automatische Erfassung der aktuellen Betriebssituation des Kraftfahrzeugs und/oder einer aktuellen Betriebsanforderung des Fahrers, wie Sensoren, vorgesehen sind, und das Getriebesteuergerät eine Funktion aufweist, mit der während des Betriebs des Kraftfahrzeugs die aktuelle Betriebssituation des Kraftfahrzeugs und/oder die aktuelle Betriebsanforderung des Fahrers ermittelbar und der dafür ausgelegte Steuerdatensatz automatisch auswählbar und aktivierbar ist.

Für die Auswahl und Freischaltung der passenden Gruppe von Steuerdatensätzen sowie die Auswahl und Aktivierung des jeweils passenden Steuerdatensatzes daraus beinhaltet jeder Steuerdatensatz bevorzugt mehrere Kenndatenfelder, die jeweils ein Entscheidungskriterium zur Auswahl der für die vorliegende Antriebsstrangkonfiguration und/oder den vorliegenden Einsatzzweck des Kraftfahrzeugs ausgelegten Gruppe von Steuerdatensätzen (statische Umschaltung) und/oder ein Entscheidungskriterium zur Auswahl des für die aktuelle Betriebssituation des Kraftfahrzeugs und/oder die aktuelle Betriebsanforderung des Fahrers ausgelegten Steuerdatensatzes (dynamische Umschaltung) enthalten.

Durch die Verwendung mehrerer Kenndatenfelder können, abhängig von der jeweiligen Anwendung und dem Kundenwunsch, verschiedene Entscheidungskriterien für die Auswahl eines Steuerdatensatzes genutzt und miteinander kombiniert werden. Hierzu enthalten diejenigen Kenndatenfelder eines Steuerdatensatzes, deren Inhalt als Auswahlkriterium der passenden Gruppe von Steuerdatensätzen (statische Umschaltung) und/oder des passenden Steuerdatensatzes (dynamische Umschaltung) vorgesehen ist, jeweils ein für den betreffenden Steuerdatensatz gültigen Referenzwert, wogegen diejenigen Kenndatenfelder, deren Inhalt nicht als Auswahlkriterium der passenden Gruppe von Steuerdatensätzen und/oder des passenden Steuerdatensatzes vorgesehen ist, jeweils den Wert Null enthalten.

Hierdurch kann die Auswahl des jeweils gültigen, also der vorliegenden Fahrzeugkonfiguration und der Betriebssituation am entsprechenden Steuerdatensatzes auf einfache Weise durch einen seriellen Vergleich der in den Kenndatenfeldern der Steuerdatensätze abgespeicherten Kenndaten oder Grenzwerte mit den aktuellen Konfigurations- und Betriebsdaten erfolgen, bis ein Steuerdatensatz gefunden ist, mit dessen Kenndaten die aktuellen Konfigurations- und Betriebsdaten übereinstimmen bzw. dessen Grenzwerte durch die aktuellen Konfigurations- und Betriebsdaten eingehalten werden. Wird keine Übereinstimmung mit einem der Steuerdatensätze erzielt, so wird ein für den Notbetrieb vorgesehener Steuerdatensatz aktiviert und gegebenenfalls eine entsprechende Fehlermeldung ausgegeben oder in einem Fehlerspeicher des Getriebesteuergerätes abgelegt.

Um die Auswahl der für den vorliegenden Antriebsmotor ausgelegten Gruppe von Steuerdatensätzen zu ermöglichen, ist zumindest ein Kenndatenfeld für die Angabe eines zulässigen minimalen Referenzdrehmomentes des Antriebsmotors und/oder ein Kenndatenfeld für die Angabe eines zulässigen maximalen Referenzdrehmomentes des Antriebsmotors vorgesehen.

Auch ist es sinnvoll, wenn für die Auswahl der für die vorliegende Getriebeausführung ausgelegten Gruppe von Steuerdatensätzen zumindest ein Kenndatenfeld für die Angabe der Ganganzahl des Stufenschaltgetriebes und/oder für die Angabe der Getriebevariante des Stufenschaltgetriebes hinsichtlich der Übersetzung der höchsten Gangstufe (Overdrive oder Direct Drive) vorgesehen ist.

Außerdem kann das Vorhalten eines Kenndatenfeldes für die Kennzeichnung einer Sondervariante des Stufenschaltgetriebes zweckmäßig sein.

Des Weiteren ist es vorteilhaft, wenn zumindest ein Kenndatenfeld für die Kennzeichnung von Steuerdatensätzen für eine während des Betriebs des Kraftfahrzeugs manuell und/oder automatisch auslösbaren Umschaltung zwischen mehreren Steuerdatensätzen (dynamische Umschaltung) vorgesehen ist. Die dynamische Umschaltung auf einen anderen Steuerdatensatz kann jeweils durch eine manuelle oder andere Aktivität des Fahrers, z.B. durch die Betätigung eines Schalters, durch das Durchtreten des Fahrpedals in Verbindung mit der Betätigung eines Kickdown-Schalters oder durch die Umschaltung eines Verteilergetriebes, oder automatisch aufgrund veränderter sensorisch erfasster äußerer Einflüsse, wie einem Wechsel der Fahrumgebung vom Flachland ins Gebirge oder einem geänderten Beladungszustand des Kraftfahrzeugs ausgelöst werden. Ebenfalls kann bei einer erkannten Störung innerhalb der Steuerungsvorrichtung auf ein Notlaufprogramm umgeschaltet werden.

Das Kenndatenfeld für Umschaltungen während des Betriebs (dynamische Umschaltung) umfasst mehrere Datenbits, wobei jedes Datenbit einem Umschaltkriterium zugeordnet ist und bei Gültigkeit des betreffenden Steuerdatensatzes für ein erfülltes Umschaltkriterium den Wert Eins und bei Gültigkeit des betreffenden Steuerdatensatzes für ein nicht-erfülltes Umschaltkriterium den Wert Null enthält. Bei einfachen Steuersignalen, die vorhanden oder nicht vorhanden sein können, reicht ein Datenbit, das die Werte Null und Eins annehmen kann, zur Identifizierung des passenden Steuerdatensatzes aus, wobei dies im Vergleich zur Verwendung einzelner Kenndatenfelder ein deutlich geringeren Speicherplatz erfordert.

Die Auswahl des jeweils passenden Steuerdatensatzes erfolgt ebenfalls durch einen seriellen Vergleich der vorliegenden Steuersignale mit den Datenbits des betreffenden Kenndatenfeldes der in Frage kommenden Steuerdatensätze. Bei einem deaktivierten Umschaltkriterium ist das entsprechende Datenbit bei allen Steuerdatensätzen mit einer Null belegt. Mittels der Bitkodierung des Kenndatenfeldes können somit bedarfsweise bestimmte Umschaltkriterien zur Auslösung betriebsabhängiger Umschaltungen zwischen den Steuerdatensätzen aktiviert und miteinander kombiniert oder deaktiviert werden.

Das Kenndatenfeld für Umschaltungen während des Betriebs (dynamische Umschaltung) sollte zumindest ein Datenbit für die manuell auslösbare Umschaltung mittels eines durch den Fahrer betätigbaren externen Schalters enthalten. Der externe Schalter kann z.B. bei einem Personenkraftwagen zur Umschaltung zwischen einem Eco-Schaltprogramm und einem Sport-Schaltprogramm und bei einem Nutzfahrzeug bzw. Lastkraftwagen zur Umschaltung zwischen einem Schaltprogramm für Straßenfahrt (bei festem Untergrund) und einem Schaltprogramm für Geländefahrt bei losem oder rutschigem Untergrund dienen.

Ein insbesondere für schwere Nutzfahrzeuge sinnvolles Umschaltkriterium zwischen verschiedenen Schaltprogrammen bzw. Steuerdatensätzen stellt der Einsatzzweck des Kraftfahrzeugs in Bezug auf die erforderliche Zugkraft, die Beladung und den vorgesehenen Fahrgeschwindigkeitsbereich dar. Das Kenndatenfeld für Umschaltungen während des Betriebs enthält daher auch ein Datenbit für eine manuell auslösbare Umschaltung zwischen einem Normalbetrieb und einem Schwertransportbetrieb des Kraftfahrzeugs.

Ebenso ist es sinnvoll, wenn das Kenndatenfeld für Umschaltungen während des Betriebs zumindest ein Datenbit für die von dem Fahrer auslösbare Umschaltung mittels eines durch eine entsprechende Betätigung des Fahrpedals auslösbaren Kickdown-Signals enthält. Durch das volle Durchtreten des Fahrpedals wird zumeist ein Kickdown-Schalter betätigt, durch den das Kick-down-Signal ausgelöst wird, worauf ein spezielles Schaltprogramm aktiviert wird, das durch ein bis zwei Rückschaltungen eine erhöhte Drehzahl des Antriebsmotors und damit ein maximales Beschleunigungsvermögen des Kraftfahrzeugs bewirkt.

Bei einem Einsatz eines automatisierten Stufenschaltgetriebes in einem mit einem schaltbaren Verteilergetriebe versehenen Kraftfahrzeug ist es auch sinnvoll, wenn das Kenndatenfeld für Umschaltungen während des Betriebs zumindest ein Datenbit für eine automatische Umschaltung durch eine sensorische Erfassung der jeweiligen Schaltstellung des Verteilergetriebes enthält. Hierdurch wird bei aktiviertem Umschaltkriterium über Schalter oder Sensoren, die mit dem Schalthebel oder anderen Elementen des Verteilergetriebes gekoppelt sind, bei einem geländegängigen Kraftfahrzeug automatisch auf den entsprechenden Steuerdatensatz umgeschaltet, wenn der Fahrer über eine Betätigung eines zugeordneten Schalthebels beispielsweise von Hinterradantrieb (2WD) auf Allradantrieb (4WD) oder von Allradantrieb ohne betätigte Differenzialsperre (4WD) auf Allradantrieb mit betätigter Differenzialsperre (4WD-Lock) umschaltet.

Für eine Verwendung des betreffenden Stufenschaltgetriebes in Nutzfahrzeugen weist das Kenndatenfeld für Umschaltungen während des Betriebs auch zumindest ein Datenbit für eine automatische Umschaltung durch eine Ermittlung der Fahrzeugmasse auf. Hierdurch kann bei aktiviertem Umschaltkriterium beladungsabhängig z.B. zwischen einem Steuerdatensatz für eine kleinere Fahrzeugmasse, also für Leerfahrten oder Fahrten mit geringer Beladung, und einem Steuerdatensatz für eine höhere Fahrzeugmasse, das heißt für Fahrten mit mittlerer und hoher Beladung, gewechselt werden.

Für eine Verwendung des betreffenden Stufenschaltgetriebes in schweren Nutzfahrzeugen ist es zudem vorteilhaft, wenn das Kenndatenfeld für Umschaltungen während des Betriebs zumindest ein Datenbit für die automatische Umschaltung durch eine automatische Passfahrterkennung enthält. Hierdurch wird bei aktiviertem Umschaltkriterium und erkannter Passfahrt rechtzeitig auf das entsprechende Schaltprogramm gewechselt, mit dem beim Befahren einer Gefällstrecke frühzeitig zurückgeschaltet wird und somit die Bremswirkung des Antriebsmotors optimal genutzt und eine Überlastung der Betriebsbremsen vermieden werden kann.

Zur Verdeutlichung der Erfindung ist der Beschreibung eine Zeichnung beigefügt.

In diesen zeigt:
- Fig. 1: einen Antriebsstrang eines Kraftfahrzeugs mit einer erfin- dungsgemäßen Steuerungsvorrichtung in einer schemati- schen Darstellung,
- Fig. 2: eine Tabelle mit Kenndatenfeldern von Steuerdatensätzen der Steuerungsvorrichtung für ein erstes Anwendungsbei- spiel,
- Fig. 3: eine Tabelle mit Kenndatenfeldern von Steuerdatensätzen der Steuerungsvorrichtung für ein zweites Anwendungsbei- spiel und
- Fig. 4: eine Tabelle mit Datenbits eines bitkodierten Kenndaten- feldes für Umschaltungen zwischen Steuerdatensätzen während des Betriebs des Kraftfahrzeugs.

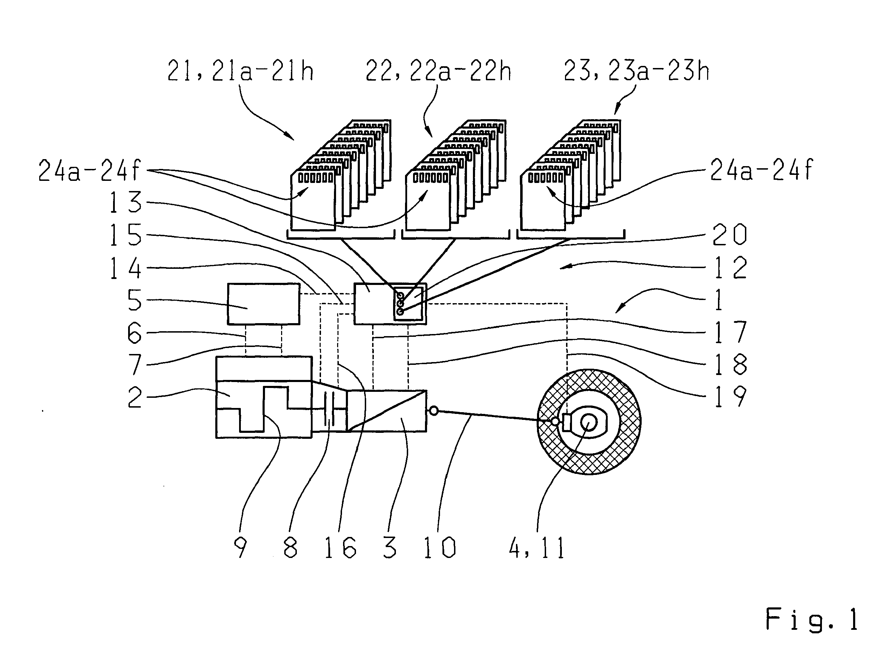

Ein in Fig. 1 schematisch dargestellter Antriebsstrang 1 eines Kraftfahrzeugs umfasst einen als Verbrennungskolbenmotor ausgebildeten Antriebsmotor 2, ein automatisiertes Stufenschaltgetriebe 3 und eine Antriebsachse 4. Dem Antriebsmotor 2 ist ein elektronisches Motorsteuergerät 5 zugeordnet, das über mindestens eine Sensorleitung 6 mit einem nicht näher dargestellten Motorsensor, wie z.B. einem Ladedrucksensor oder einem Drehzahlsensor, und über mindestens eine Steuerleitung 7 mit einem nicht näher dargestellten Motorstellglied, wie z.B. einem Drosselklappensteller oder einem Einspritzmengensteller, in Verbindung steht. Das automatisierte Stufenschaltgetriebe 3 steht eingangsseitig über eine steuerbare Kupplung 8 mit der Antriebswelle 9 des Antriebsmotors 2 und ausgangsseitig über eine Triebwelle 10 mit einem Achsdifferenzialgetriebe 11 der Antriebsachse 4 in Triebverbindung.

Der Steuerungsvorrichtung 12 des Stufenschaltgetriebes 3 ist ein elektronisches Getriebesteuergerät 13 zugeordnet, das über mindestens eine Datenleitung 14 mit dem Motorsteuergerät 5, über mindestens eine Sensorleitung 15 mit einem nicht näher dargestellten Kupplungssensor der Kupplung 8, wie z.B. einem Stellwegsensor, und über mindestens eine Steuerleitung 16 mit einem nicht näher dargestellten Kupplungssteller der Kupplung 8 in Verbindung steht. Des Weiteren steht das Getriebesteuergerät 13 über mindestens eine Steuerleitung 17 mit einem nicht näher dargestellten Schalt- und Wählaktuator des Stufenschaltgetriebes 3, über mindestens eine Sensorleitung 18 mit einem nicht näher dargestellten Getriebesensor des Stufenschaltgetriebes 8, wie z.B. einem Schaltsensor, und über mindestens eine Sensorleitung 19 mit einem nicht näher dargestellten Achssensor der Antriebsachse 4, wie z.B. einem Drehzahlsensor, in Verbindung.

Das Getriebesteuergerät 13 weist einen Datenspeicher 20 auf, in dem mehrere Gruppen 21, 22, 23 von Steuerdatensätzen 21 a bis 21 h, 22a bis 22h, 23a bis 23h permanent abgespeichert sind, wobei jede Gruppe 21, 22, 23 von Steuerdatensätzen 21 a bis 21 h, 22a bis 22h, 23a bis 23h jeweils für eine andere Antriebsstrangkonfiguration und/oder einen anderen Einsatzzweck des Kraftfahrzeugs ausgelegt und nutzbar ist. Jeder der Steuerdatensätze 21 a bis 21 h, 22a bis 22h, 23a bis 23h ist für einen bestimmten Betriebsbereich des Kraftfahrzeugs, wie beispielsweise Straßenfahrt oder Geländefahrt, Leerfahrt (unbeladen) oder Lastfahrt (beladen), oder Passfahrt (hohe Steigung und Gefälle) oder Fahrt in der Ebene (geringe Steigungen), ausgelegt und beinhaltet neben einem entsprechen Schaltkennfeld auch mehrere Kenndatenfelder 24a bis 24f.

Die Kenndatenfelder 24a bis 24f enthalten jeweils ein Entscheidungskriterium zur Auswahl der für die vorliegende Antriebsstrangkonfiguration und/ oder den vorliegenden Einsatzzweck des Kraftfahrzeugs ausgelegten Gruppe 21, 22, 23 von Steuerdatensätzen 21 a bis 21 h, 22a bis 22h, 23a bis 23h oder ein Entscheidungskriterium zur Auswahl des für die aktuelle Betriebssituation des Kraftfahrzeugs und/oder die aktuelle Betriebsanforderung des Fahrers ausgelegten Steuerdatensatzes 21 a bis 21 h, 22a bis 22h, 23a bis 23h. Falls ein bestimmtes Entscheidungskriterium nicht benutzt werden soll, enthält das entsprechende Kenndatenfeld 24a bis 24f den Wert Null.

Nachfolgend wird anhand von zwei Beispielen erläutert, wie durch einen Vergleich von Ist-Daten mittels des Inhalts der Kenndatenfelder 24a bis 24f die jeweils passende Gruppe 21, 22, 23 von Steuerdatensätzen 21 a bis 21 h, 22a bis 22h, 23a bis 23h und der passende Steuerdatensatz 21 a bis 21 h, 22a bis 22h, 23a bis 23h ausgewählt und aktiviert wird.

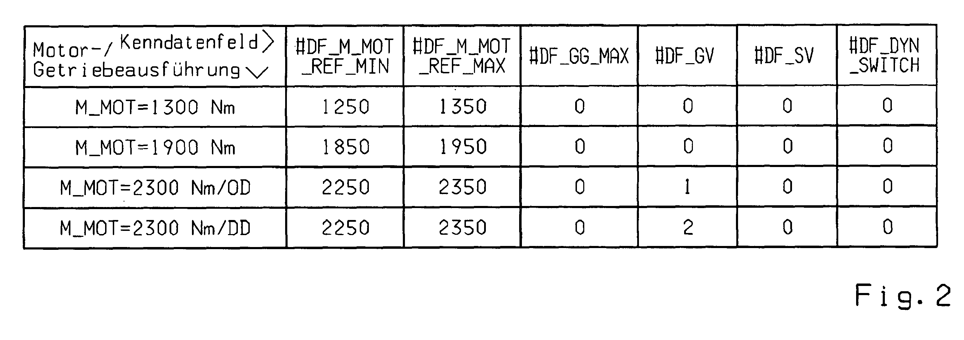

In einem ersten Beispiel gemäß der Tabelle der Fig. 2 soll ein automatisiertes Stufenschaltgetriebe bei einem Lastkraftwagen-Hersteller mit drei verschieden starken Antriebsmotoren mit maximalen Drehmomenten M_MOT = 1 300 Nm, 1 900 Nm oder 2 300 Nm kombiniert werden, wobei in der Kombination mit dem stärksten Antriebsmotor (M_MOT = 2 300 Nm) eine Unterscheidung zwischen einer Overdrive-Ausführung (nachfolgend kurz als OD bezeichnet), bei welcher der höchste Gang eine Übersetzung i < 1 aufweist, und einer Directdrive-Ausführung (nachfolgend kurz als DD bezeichnet), bei welcher der höchste Gang durch einen Direktgang gebildet wird (i = 1), erfolgen soll, also unterschiedliche Steuerdatensätze verwendet werden sollen.

Die Steuerdatensätze beinhalten jeweils sechs Kenndatenfelder, von denen vorliegend jedoch nur drei genutzt werden. Das Kenndatenfeld #DF_M_MOT_REF_MIN dient zur Angabe eines Minimalwertes des Motor-Referenzmomentes M_MOT, für das der betreffende Steuerdatensatz ausgelegt ist. Das Kenndatenfeld #DF_M_MOT_REF_MAX dient zur Angabe eines Maximalwertes des Motor-Referenzmomentes M_MOT, für das der betreffende Steuerdatensatz ausgelegt ist.

Das hier nicht genutzte Kenndatenfeld #DF_GG_MAX kann zur Angabe der Ganganzahl des Stufenschaltgetriebes genutzt werden, welches bei Verwendung verschiedener Getriebeausführungen mit unterschiedlicher Ganganzahl sinnvoll ist.

Das Kenndatenfeld #DF_GV dient zur Angabe der Getriebevariante, hier zur Unterscheidung zwischen der OD-Ausführung (#DF_GV = 1) und der DD-Ausführung (#DF_GV = 2). Bei den Steuerdatensätzen für die schwächeren Antriebsmotoren (M_MOT = 1 300 Nm, 1 900 Nm) wird diese Unterscheidung nicht durchgeführt, das heißt, es werden jeweils dieselben Schaltkennfelder verwendet, so dass das Kenndatenfeld #DF_GV bei diesen Steuerdatensätzen den Wert Null enthält (#DF_GV = 0).

Das hier nicht benutzte Kenndatenfeld #DF_SV kann zur Unterscheidung zwischen einer Normalvariante und einer Sondervariante des Kraftfahrzeugs oder des Stufenschaltgetriebes verwendet werden. Das ebenfalls hier nicht genutzte Kenndatenfeld #DF_DYN_SWITCH kann zur Steuerung von während des Betriebs des Kraftfahrzeugs möglichen Umschaltungen zwischen mehreren Steuerdatensätzen genutzt werden.

Vorliegend wird somit durch den Vergleich des Referenzmomentes M_MOT des Antriebsmotors und der Getriebevariante (OD/DD) des Stufenschaltgetriebes mit dem Inhalt der Kenndatenfelder #DF_M_MOT_REF_MIN und #DF_M_MOT_REF_MAX, #DF_GV der jeweils richtige Steuerdatensatz bzw. die richtige Gruppe von Steuerdatensätzen ausgewählt und zur Steuerung des Stufenschaltgetriebes aktiviert.

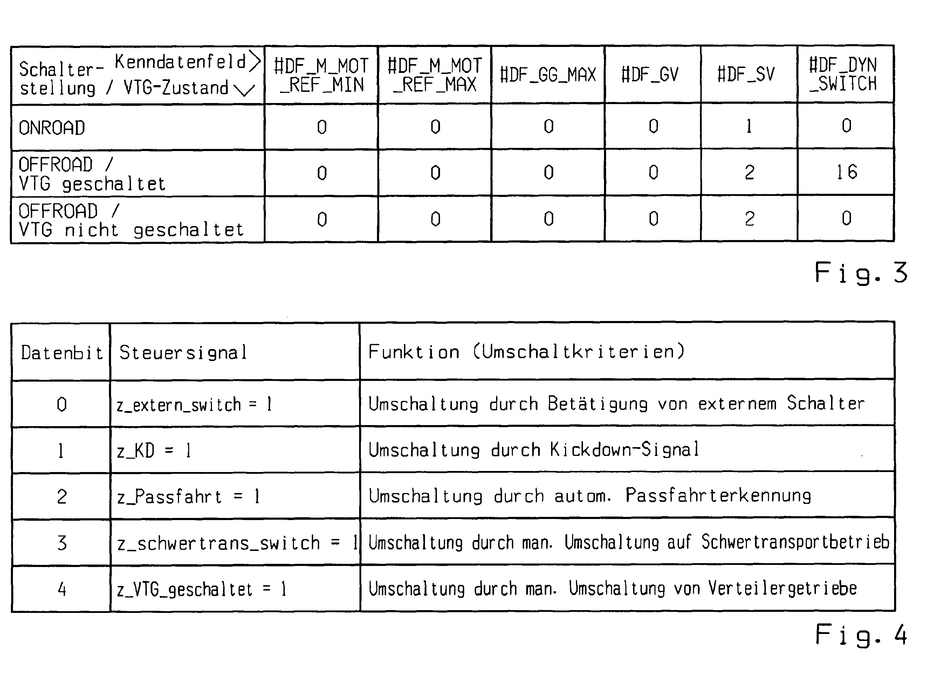

In einem zweiten Beispiel gemäß der Tabelle von Fig. 3 soll das Schaltverhalten eines automatisierten Stufenschaltgetriebes, das in einem Baustellenfahrzeug eingebaut ist, mittels eines manuell betätigbaren Betriebsschalters von Straßenfahrt (ONROAD) auf Geländefahrt (OFFROAD) umschaltbar sein. Im Offroad-Modus soll zudem, abhängig vom Schaltzustand des Verteilergetriebes VTG (VTG geschattet / nicht geschaltet), eine automatische Umschaltung zwischen entsprechenden Schaltkennfeldern bzw. Steuerdatensätzen erfolgen. Die Steuerdatensätze beinhalten dieselben sechs Kenndatenfelder wie in dem ersten Beispiel nach der Tabelle von Fig. 2. Es werden jedoch nur die letzten beiden Kenndatenfelder #DF_SV und #DF_DYN_SWITCH genutzt, so dass die übrigen Kenndatenfelder jeweils eine Null enthalten.

Der Steuerdatensatz für ONROAD-Betrieb weist demnach in seinem Kenndatenfeld #DF_SV den Wert Eins auf, und die Steuerdatensätze für OFFROAD-Betrieb weisen dort jeweils den Wert Zwei auf. Im OFFROAD-Betrieb wird zwischen einem Steuerdatensatz für ein geschaltetes Verteilergetriebe, z.B. für eingeschalteten Allradantrieb, und einem Steuerdatensatz für ein nicht geschaltetes Verteilergetriebe, z.B. für eingeschalteten Hinterradantrieb, unterschieden. Hierzu enthält der Steuerdatensatz, der für OFFROAD-Betrieb bei geschaltetem Verteilergetriebe vorgesehen ist, in dem Kenndatenfeld #DF_DYN_SWITCH den Wert 16.

Bei dem Kenndatenfeld #DF_DYN_SWITCH handelt es sich um ein bitkodiertes Datenfeld, dessen Aufbau beispielhaft aus der Tabelle von Fig. 4 hervorgeht. Das Kenndatenfeld #DF_DYN_SWITCH besteht demnach aus fünf Datenbits, wobei jedem Datenbit ein bestimmtes Umschaltkriterium für eine Umschaltung zwischen mehreren Steuerdatensätzen während des Betriebs des Kraftfahrzeugs zugeordnet ist. Bei Vorliegen des entsprechenden Steuersignals ist das Umschaltkriterium bei Vorliegen einer Eins in dem Datenbit erfüllt, so dass der betreffende Steuerdatensatz bei Erfüllung der übrigen Bedingungen aktiviert wird, und bei Vorliegen einer Null in dem Datenbit nicht erfüllt, so dass der betreffende Steuerdatensatz dann nicht aktiviert wird.

Vorliegend wird beispielhaft nur das letzte Datenbit als Unterscheidungskriterium genutzt. Aufgrund der Bitkodierung entspricht die 16 in dem Kenndatenfeld #DF_DYN_SWITCH des zweiten Steuerdatensatzes der Tabelle von Fig. 3 dem Bitmuster 00001. Hierdurch wird bewirkt, dass im OFFROAD-Betrieb abhängig von der Schaltstellung des Verteilergetriebes zwischen zwei Steuerdatensätzen gewechselt wird. Bei Vorliegen eines Steuersignals für geschaltetes Verteilergetriebe (Steuersignal: z_VTG_geschaltet = 1) wird somit auf den Steuerdatensatz für OFFROAD-Betrieb/VTG_geschaltet und bei Vorliegen eines Steuersignals für nicht-geschaltetes Verteilergetriebe (Steuersignal: z_VTG_geschaltet = 0) auf den Steuerdatensatz für OFFROAD-Betrieb/TG_nicht_geschaltet umgeschaltet, sofern zum Zeitpunkt des Signaleingangs der Betriebsschalter auf OFFROAD-Betrieb steht und der jeweils andere Steuerdatensatz für OFFROAD-Betrieb aktiviert ist.

Wie Fig. 4 weiter zeigt, sind weitere, unterschiedliche Umschaltkriterien definierende Steuersignale vorgesehen und diesbezüglichen Datenbits zugeordnet. So bedeutet das Vorliegen des Steuersignals z_extern_switch = 1 eine Umschaltung durch eine manuelle Betätigung von einem externen Schalten (Datenbit = 0), das Vorliegen des Steuersignals z_KD = 1 eine Umschaltung durch ein Kickdown-Signal einer Fahrpedalbetätigung (Datenbit = 1), das Vorliegen des Steuersignals z_Passfahrt = 1 eine Umschaltung durch eine automatische Passfahrt-Erkennungseinrichtung (Datenbit = 2) und das Vorliegen des Steuersignals z_schwertrans_switch = 1 eine manuelle Umschaltung durch den Fahrer auf einen Schwertransportbetrieb.

### Bezugszeichen

- 1: Antriebsstrang
- 2: Antriebsmotor
- 3: Stufenschaltgetriebe
- 4: Antriebsachse
- 5: Motorsteuergerät
- 6: Sensorleitung
- 7: Steuerleitung
- 8: Kupplung
- 9: Antriebswelle
- 10: Triebwelle
- 11: Achsdifferenzial
- 12: Steuerungsvorrichtung
- 13: Getriebesteuergerät
- 14: Datenleitung
- 15: Sensorleitung
- 16: Steuerleitung
- 17: Steuerleitung
- 18: Sensorleitung
- 19: Sensorleitung
- 20: Datenspeicher
- 21: Gruppe
- 21a - 21h: Steuerdatensatz
- 22: Gruppe
- 22a - 22h: Steuerdatensatz
- 23: Gruppe
- 23a - 23h: Steuerdatensatz
- 24a - 24f: Kenndatenfeld
- DD: Getriebevariante Direct Drive (i = 1)
- KD: Kick-down
- M_MOT: Referenzdrehmoment des Antriebsmotors
- OD: Getriebevariante Overdrive (i < 1)
- VTG: Verteilergetriebe
- z_extern_switch: Steuersignal
- z_KD: Steuersignal
- z_Passfahrt: Steuersignal
- z_schwertrans_switch: Steuersignal
- z_VTG_geschaltet: Steuersignal
- #DF_DYN_SWITCH: Kenndatenfeld
- #DF_GG_MAX: Kenndatenfeld
- #DF-GV: Kenndatenfeld
- #DF_M_MOT_REF_MAX: Kenndatenfeld
- #DF_M_MOT_REF_MIN: Kenndatenfeld
- #DF_SV: Kenndatenfeld

## Patentansprüche

1. Steuerungsvorrichtung für ein automatisiertes Stufenschaltgetriebe, das in einem Antriebsstrang (1) eines Kraftfahrzeugs im Kraftfluss zwischen einem Antriebsmotor (2) und dem Achsdifferenzial (11) einer Antriebsachse (4) oder einem Verteilergetriebe angeordnet ist, die ein elektronisches Getriebesteuergerät (13) mit einem Datenspeicher (20) umfasst, auf dem mehrere Steuerdatensätze abgespeichert sind, wobei jeweils einer der Steuerdatensätze manuelle und/oder automatisch auswählbar und zur Steuerung des Stufenschaltgetriebes (3) aktivierbar ist, wobei mehrere Gruppen (21, 22, 23) von Steuerdatensätzen (21a - 21 h, 22a - 22h, 23a - 23h) permanent auf dem Datenspeicher (20) abgespeichert sind, wobei jede Gruppe (21, 22, 23) von Steuerdatensätzen jeweils für eine andere Antriebsstrangkonfiguration und/oder einen anderen Einsatzzweck des Kraftfahrzeugs ausgelegt ist, und wobei die für die vorliegende Antriebsstrangkonfiguration und/oder den vorliegenden Einsatzzweck des Kraftfahrzeugs ausgelegte Gruppe (21) von Steuerdatensätzen für eine Nutzung freigeschaltet und die übrigen Gruppen von Steuerdatensätzen (22, 23) für eine Nutzung gesperrt sind, **dadurch gekennzeichnet,**
**dass** jeder Steuerdatensatz (21a - 21h, 22a - 22h, 23a - 23h) mehrere Kenndatenfelder (24a - 24f) beinhaltet, die jeweils ein Entscheidungskriterium zur Auswahl der für die vorliegende Antriebsstrangkonfiguration und/oder den vorliegenden Einsatzzweck des Kraftfahrzeugs ausgelegten Gruppe (21) von Steuerdatensätzen und ein Entscheidungskriterium zur Auswahl des für die aktuelle Betriebssituation des Kraftfahrzeugs und/oder die aktuelle Betriebsanforderung des Fahrers ausgelegten Steuerdatensatzes (21a) enthalten, und dass zumindest ein Kenndatenfeld (24a, #DF_M_MOT_REF_MIN/MAX) für die Angabe eines zulässigen minimalen und/oder maximalen Referenzdrehmomentes des Antriebsmotors (2) vorgesehen ist.

2. Vorrichtung nach Anspruch 1, **dadurch gekennzeichnet, dass** Mittel für eine manuelle Auswahl und Freischaltung der für die vorliegende Antriebsstrangkonfiguration und/öder den vorliegenden Einsatzzweck des Kraftfahrzeugs ausgelegte Gruppe (21) von Steuerdatensätzen und für eine manuelle Sperrung der übrigen Gruppen (22, 23) von Steuerdatensätzen vorgesehen sind.

3. Vorrichtung nach Anspruch 2, **dadurch gekennzeichnet, dass** dem Datenspeicher (20) ein programmierbarer Adressdatenspeicher (EPROM) zugeordnet ist, in dem die Speicheradressen der Steuerdatensätze (21a - 21h) der ausgewählten und freizuschaltenden Gruppe (21) von Steuerdatensätzen abspeicherbar sind.

4. Vorrichtung nach Anspruch 2, **dadurch gekennzeichnet, dass** dem Datenspeicher (20) eine Anordnung mehrerer Steckkontakte zugeordnet ist, bei der die Speicheradressen der Steuerdatensätze (21a - 21 h) der ausgewählten und freizuschaltenden Gruppe (21) von Steuerdatensätzen durch die Anordnung von Steckbrücken einstellbar sind.

5. Vorrichtung nach Anspruch 2, **dadurch gekennzeichnet, dass** dem Datenspeicher (20) eine Anordnung mehrerer Mikroschalter zugeordnet ist, bei der die Speicheradressen der Steuerdatensätze (21a - 21h) der ausgewählten und freizuschaltenden Gruppe (21) von Steuerdatensätzen über die Schalterstellungen der Mikroschalter einstellbar sind.

6. Vorrichtung nach zumindest einem der Ansprüche 1 bis 5, **dadurch gekennzeichnet, dass** Mittel für eine automatische Erfassung der vorliegenden Antriebsstrangkonfiguration und/oder des vorliegenden Einsatzzwecks des Kraftfahrzeugs vorgesehen sind, und dass das Getriebesteuergerät (13) eine Funktion aufweist, mit der bei einer Inbetriebnahme des Kraftfahrzeugs die vorliegende Antriebsstrangkonfiguration und/oder der vorliegende Einsatzzweck des Kraftfahrzeugs ermittelbar und die dafür ausgelegte Gruppe (21) von Steuerdatensätzen automatisch auswählbar und freischaltbar ist.

7. Vorrichtung nach zumindest einem der Ansprüche 1 bis 6, **dadurch gekennzeichnet, dass** Mittel für eine manuelle Auswahl und Aktivierung des für die aktuelle Betriebssituation des Kraftfahrzeugs und/oder die aktuelle Betriebsanforderung des Fahrers ausgelegten Steuerdatensatzes (21 a) vorgesehen sind.

8. Vorrichtung nach zumindest einem der Ansprüche 1 bis 7, **dadurch gekennzeichnet, dass** Mittel für eine automatische Erfassung der aktuellen Betriebssituation des Kraftfahrzeugs und/oder einer aktuellen Betriebsanforderung des Fahrers vorgesehen sind, und dass das Getriebesteuergerät (13) eine Funktion aufweist, mit der während des Betriebs des Kraftfahrzeugs die aktuelle Betriebssituation des Kraftfahrzeugs und/oder die aktuelle Betriebsanforderung des Fahrers ermittelbar und der dafür ausgelegte Steuerdatensatz (21a) automatisch auswählbar und aktivierbar ist.

9. Vorrichtung nach einem der Ansprüche 1 bis 8, **dadurch gekennzeichnet, dass** diejenigen Kenndatenfelder (24a - 24f) eines Steuerdatensatzes, deren Inhalt als Auswahlkriterium der passenden Gruppe (21) von Steuerdatensätzen und/oder des passenden Steuerdatensatzes (21a) vorgesehen ist, jeweils ein für den betreffenden Steuerdatensatz gültigen Referenzwert enthalten, und dass diejenigen Kenndatenfelder (24a - 24f), deren Inhalt nicht als Auswahlkriterium der passenden Gruppe (21) von Steuerdatensätzen und/oder des passenden Steuerdatensatzes (21 a) vorgesehen ist, jeweils den Wert Null enthalten.

10. Vorrichtung nach zumindest einem der Ansprüche 1 bis 9, **dadurch gekennzeichnet, dass** wenigstens ein Kenndatenfeld (24c, #DF_GG_MAX) für die Angabe der Ganganzahl des Stufenschaltgetriebes (3) vorgesehen ist.

11. Vorrichtung nach zumindest einem der Ansprüche 1 bis 10, **dadurch gekennzeichnet, dass** zumindest ein Kenndatenfeld (24d, #DF_GV) für die Angabe der Getriebevariante (OD, DD) des Stufenschaltgetriebes (3) hinsichtlich der Übersetzung (i < 1) oder (i = 1) der höchsten Gangstufe vorgesehen ist.

12. Vorrichtung nach zumindest einem der Ansprüche 1 bis 11, **dadurch gekennzeichnet, dass** zumindest ein Kenndatenfeld (24e, #DF_SV) für die Kennzeichnung einer Sondervariante des Stufenschaltgetriebes (3) vorgesehen ist.

13. Vorrichtung nach zumindest einem der Ansprüche 1 bis 12, **dadurch gekennzeichnet, dass** zumindest ein Kenndatenfeld (24f, #DF_DYN_SWITCH) für die Kennzeichnung von Steuerdatensätzen (21a - 21 h) für eine während des Betriebs des Kraftfahrzeugs manuell und/oder automatisch auslösbaren Umschaltung zwischen mehreren Steuerdatensätzen (21a - 21h) vorgesehen ist.

14. Vorrichtung nach Anspruch 13, **dadurch gekennzeichnet, dass** das Kenndatenfeld für Umschaltungen während des Betriebs (24f, #DF_DYN_SWITCH) mehrere Datenbits umfasst, wobei jedes Datenbit einem Umschaltkriterium zugeordnet ist, und dass bei Gültigkeit des betreffenden Steuerdatensatzes (21a - 21h) für ein erfülltes Umschaltkriterium den Wert Eins und bei Gültigkeit des betreffenden Steuerdatensatzes für ein nicht-erfülltes Umschaltkriterium den Wert Null enthält.

15. Vorrichtung nach Anspruch 14, **dadurch gekennzeichnet, dass** das Kenndatenfeld für Umschaltungen während des Betriebs (24f, #DF_ DYN_SWITCH) zumindest ein Datenbit für eine manuell auslösbare Umschaltung mittels eines durch den Fahrer betätigbaren externen Schalters (Steuersignal: z_extern_switch) enthält.

16. Vorrichtung nach Anspruch 14 oder 15, **dadurch gekennzeichnet, dass** das Kenndatenfeld für Umschaltungen während des Betriebs (24f, #DF _DYN_SWITCH) zumindest ein Datenbit für eine manuell auslösbare Umschaltung zwischen einem Normalbetrieb und einem Schwertransportbetrieb des Kraftfahrzeugs (Steuersignal z_schwertrans_switch) enthält.

17. Vorrichtung nach zumindest einem der Ansprüche 14 bis 16, **dadurch gekennzeichnet, dass** das Kenndatenfeld für Umschaltungen während des Betriebs (24f, #DF_DYN_SWITCH) zumindest ein Datenbit für eine von dem Fahrer auslösbare Umschaltung mittels eines durch eine Betätigung des Fahrpedals auslösbaren Kickdown-Signals (Steuersignal: z_KD) enthält. ,

18. Vorrichtung nach einem der Ansprüche 14 bis 17, **dadurch gekennzeichnet, dass** das Kenndatenfeld für Umschaltungen während des Betriebs (24f, #DF_DYN_SWITCH) zumindest ein Datenbit für eine automatische Umschaltung durch eine sensorische Erfassung der jeweiligen Schaltstellung des Verteilergetriebes (Steuersignal: z_VTG_geschaltet) enthält.

19. Vorrichtung nach einem der Ansprüche 14 bis 18, **dadurch gekennzeichnet, dass** das Kenndatenfeld für Umschaltungen während des Betriebs (24f, #DF_DYN_SWITCH) zumindest ein Datenbit für eine automatische Umschaltung durch eine Ermittlung der Fahrzeugmasse enthält.

20. Vorrichtung nach einem der Ansprüche 14 bis 19, **dadurch gekennzeichnet, dass** das Kenndatenfeld für Umschaltungen während des Betriebs (24f, #DF_DYN_SWITCH) zumindest ein Datenbit für eine automatische Umschaltung durch eine Passfahrterkennung (Steuersignal: z_Passfahrt) enthält.

## Claims

1. Control device for an automatic multi-step shift transmission which is arranged in a drivetrain (1) of a motor vehicle in the power flow between a drive engine (2) and the axle differential (11) of a drive axle (4) or a transfer box, which control device comprises an electronic transmission control unit (13) with a data memory (20) on which are stored a plurality of control data sets, with it being possible for in each case one of the control data sets to be selected manually and/or automatically and activated for controlling the multi-step shift transmission (3), with a plurality of groups (21, 22, 23) of control data sets (21a - 21h, 22a - 22h, 23a - 23h) being stored permanently on the data memory (20), with each group (21, 22, 23) of control data sets being designed in each case for a different drivetrain configuration and/or a different intended use of the motor vehicle, and with the group (21) of control data sets designed for the present drivetrain configuration and/or the present intended use of the motor vehicle being enabled for use, and the other groups of control data sets (22, 23) being disabled from use, **characterized**
**in that** each control data set (21a - 21h, 22a - 22h, 23a - 23h) comprises a plurality of characteristic data maps (24a - 24f) which contain in each case a decision criterion for the selection of the group (21) of control data sets designed for the present drivetrain configuration and/or the present intended use of the motor vehicle, and a decision criterion for the selection of the control data set (21a) designed for the present operating situation of the motor vehicle and/or the present operating demand by the driver, and in that at least one characteristic data map (24a, #DF_M_MOT_REF_MIN/MAX) is provided for specifying an admissible minimum and/or maximum reference torque of the drive motor (2).

2. Device according to Claim 1, **characterized in that** means are provided for manually selecting and enabling the group (21) of control data sets designed for the present drivetrain configuration and/or the present intended use of the motor vehicle and for manually disabling the other groups (22, 23) of control data sets.

3. Device according to Claim 2, **characterized in that** the data memory (20) is assigned a programmable address data memory (EPROM) in which can be stored the memory addresses of the control data sets (21a - 21h) of the selected group (21) of control data sets to be enabled.

4. Device according to Claim 2, **characterized in that** the data memory (20) is assigned an arrangement of a plurality of plug contacts, in which the memory addresses of the control data sets (21a - 21h) of the selected group (21) of control data sets to be enabled can be set by the arrangement of link plugs.

5. Device according to Claim 2, **characterized in that** the data memory (20) is assigned an arrangement of a plurality of microswitches, in which the memory addresses of the control data sets (21a - 21h) of the selected group (21) of control data sets to be enabled can be set by means of the switch positions of the microswitches.

6. Device according to at least one of Claims 1 to 5, **characterized in that** means are provided for automatically detecting the present drivetrain configuration and/or the present intended use of the motor vehicle, and **in that** the transmission control unit (13) has a function by means of which, when the motor vehicle is put into operation, the present drivetrain configuration and/or the present intended use of the motor vehicle can be determined, and the group (21) of control data sets designed therefor can be automatically selected and enabled.

7. Device according to at least one of Claims 1 to 6, **characterized in that** means are provided for manually selecting and activating the control data set (21a) designed for the present operating situation of the motor vehicle and/or the present operating demand by the driver.

8. Device according to at least one of Claims 1 to 7, **characterized in that** means are provided for automatically detecting the present operating situation of the motor vehicle and/or a present operating demand by the driver, and **in that** the transmission control unit (13) has a function by means of which, during the operation of the motor vehicle, the present operating situation of the motor vehicle and/or the present operating demand by the driver can be determined, and the control data set (21a) designed therefor can be automatically selected and activated.

9. Device according to one of Claims 1 to 8, **characterized in that** those characteristic data maps (24a - 24f) of a control data set whose content is provided as a selection criterion for the suitable group (21) of control data sets and/or the suitable control data set (21a) contain in each case one reference value valid for the respective control data set, and **in that** those characteristic data maps (24a - 24f) whose content is not provided as a selection criterion for the suitable group (21) of control data sets and/or the suitable control data set (21a) contain in each case the value zero.

10. Device according to at least one of Claims 1 to 9, **characterized in that** at least one characteristic data map (24c, #DF_GG_MAX) is provided for specifying the number of gears of the multi-step shift transmission (3).

11. Device according to at least one of Claims 1 to 10, **characterized in that** at least one characteristic data map (24d, #DF_GV) is provided for specifying the transmission variant (OD, DD) of the multi-step shift transmission (3) with regard to the transmission ratio (i < 1) or (i = 1) of the highest gear stage.

12. Device according to at least one of Claims 1 to 11, **characterized in that** at least one characteristic data map (24e, #DF_SV) is provided for characterizing a special variant of the multi-step shift transmission (3) .

13. Device according to at least one of Claims 1 to 12, **characterized in that** at least one characteristic data map (24f, #DF_DYN_SWITCH) is provided for characterizing control data sets (21a - 21h) for a switch, which can be triggered manually and/or automatically during operation of the motor vehicle, between a plurality of control data sets (21a - 21h).

14. Device according to Claim 13, **characterized in that** the characteristic data map for switches during operation (24f, #DF_DYN_SWITCH) comprises a plurality of data bits, with each data bit being assigned a switching criterion, and containing the value one if the respective control data set (21a - 21h) is valid for a satisfied switching criterion, and containing the value zero if the respective control data set is valid for a non-satisfied switching criterion.

15. Device according to Claim 14, **characterized in that** the characteristic data map for switches during operation (24f, #DF_DYN_SWITCH) comprises at least one data bit for a manually triggerable switch by means of an external switch (control signal: z_extern_switch) which can be actuated by the driver.

16. Device according to Claim 14 or 15, **characterized in that** the characteristic data map for switches during operation (24f, #DF_DYN_SWITCH) comprises at least one data bit for a manually triggerable switch between a normal mode and a heavy transport mode of the motor vehicle (control signal: z_schwertrans_switch).

17. Device according to at least one of Claims 14 to 16, **characterized in that** the characteristic data map for switches during operation (24f, #DF_DYN_SWITCH) comprises at least one data bit for a switch, which can be triggered by the driver, by means of a kickdown signal (control signal: z_KD) which can be triggered by means of an actuation of the accelerator pedal.

18. Device according to one of Claims 14 to 17, **characterized in that** the characteristic data map for switches during operation (24f, #DF_DYN_SWITCH) comprises at least one data bit for an automatic switch as a result of a sensor-based detection of the respective shift position of the transfer box (control signal: z_VTG_geschaltet).

19. Device according to one of Claims 14 to 18, **characterized in that** the characteristic data map for switches during operation (24f, #DF_DYN_SWITCH) comprises at least one data bit for an automatic switch as a result of a determination of the vehicle mass.

20. Device according to one of Claims 14 to 19, **characterized in that** the characteristic data map for switches during operation (24f, #DF_DYN_SWITCH) comprises at least one data bit for an automatic switch as a result of a detection of mountain pass driving (control signal: z_Passfahrt).

## Revendications

1. Dispositif de commande pour une boîte de vitesses étagée automatique qui est disposée dans une chaîne motrice (1) d'un véhicule automobile dans le flux des forces entre un moteur d'entraînement (2) et le différentiel d'essieu (11) d'un essieu moteur (4) ou une boîte de transfert, lequel comprend un contrôleur électronique de boîte de vitesses (13) avec une mémoire de données (20) dans laquelle sont enregistrés plusieurs jeux de données de commande, l'un des jeux de données de commande pouvant respectivement être sélectionné manuellement et/ou automatiquement et pouvant être activé pour commander la boîte de vitesses étagée (3), plusieurs groupes (21, 22, 23) de jeux de données de commande (21a-21h, 22a-22h, 23a-23h) étant enregistrés en permanence dans la mémoire de données (20), chaque groupe (21, 22, 23) de jeux de données de commande étant à chaque fois conçu pour une autre configuration de la chaîne motrice et/ou pour un autre usage du véhicule automobile, et le groupe (21) de jeux de données de commande conçu pour la présente configuration de la chaîne motrice et/ou le présent usage du véhicule automobile étant validé pour une utilisation et les autres groupes (22, 23) de jeux de données de commande étant bloqués pour une utilisation, **caractérisé en ce que** chaque jeu de données de commande (21a-21h, 22a-22h, 23a-23h) contient plusieurs champs de caractéristiques (24a - 24f) qui contiennent respectivement un critère de décision pour sélectionner le groupe (21) de jeux de données de commande conçu pour la présente configuration de la chaîne motrice et/ou le présent usage du véhicule automobile et un critère de décision pour sélectionner le jeu de données de commande (21a) conçu pour la situation opérationnelle actuelle du véhicule automobile et/ou la demande opérationnelle actuelle du conducteur, et qu'au moins un champ de caractéristiques (24a, #DF_M_MOT_REF_MIN/MAX) est prévu pour indiquer un couple de référence minimum et/ou maximum autorisé du moteur d'entraînement (2).

2. Dispositif selon la revendication 1, **caractérisé en ce que** des moyens sont prévus pour une sélection manuelle et une validation du groupe (21) de jeux de données de commande conçu pour la présente configuration de la chaîne motrice et/ou le présent usage du véhicule automobile et pour un blocage manuel des autres groupes (22, 23) de jeux de données de commande.

3. Dispositif selon la revendication 2, **caractérisé en ce qu'**à la mémoire de données (20) est associée une mémoire de données d'adresse programmable (EPROM) dans laquelle peuvent être enregistrées les adresses d'enregistrement des jeux de données de commande (21a - 21h) du groupe (21) de jeux de données de commande sélectionné et à valider.

4. Dispositif selon la revendication 2, **caractérisé en ce qu'**à la mémoire de données (20) est associé un arrangement de plusieurs contacts enfichables dans lequel les adresses d'enregistrement des jeux de données de commande (21a - 21h) du groupe (21) de jeux de données de commande sélectionné et à valider peuvent être réglées par l'arrangement de cavaliers enfichables.

5. Dispositif selon la revendication 2, **caractérisé en ce qu'**à la mémoire de données (20) est associé un arrangement de plusieurs microcontacts dans lequel les adresses d'enregistrement des jeux de données de commande (21a - 21h) du groupe (21) de jeux de données de commande sélectionné et à valider peuvent être réglées par les positions de commutation des microcontacts.

6. Dispositif selon au moins l'une des revendications 1 à 5, **caractérisé en ce que** des moyens sont prévus pour une détection automatique de la présente configuration de la chaîne motrice et/ou du présent usage du véhicule automobile et que le contrôleur de boîte de vitesses (13) présente une fonction qui permet, lors d'une mise en service du véhicule automobile, de déterminer la présente configuration de la chaîne motrice et/ou le présent usage du véhicule automobile et de sélectionner et de valider automatiquement le groupe (21) de jeux de données de commande conçu à cet effet.

7. Dispositif selon au moins l'une des revendications 1 à 6, **caractérisé en ce que** des moyens sont prévus pour une sélection manuelle et une activation du jeu de données de commande (21a) conçu pour la situation opérationnelle actuelle du véhicule automobile et/ou la demande opérationnelle actuelle du conducteur.

8. Dispositif selon au moins l'une des revendications 1 à 7, **caractérisé en ce que** des moyens sont prévus pour une détection automatique de la situation opérationnelle actuelle du véhicule automobile et/ou d'une demande opérationnelle actuelle du conducteur et que le contrôleur de boîte de vitesses (13) présente une fonction qui permet, pendant le fonctionnement du véhicule automobile, de déterminer la situation opérationnelle actuelle du véhicule automobile et/ou la demande opérationnelle actuelle du conducteur et de sélectionner et de valider automatiquement le jeu de données de commande (21a) conçu à cet effet.

9. Dispositif selon l'une des revendications 1 à 8, **caractérisé en ce que** les champs de caractéristiques (24a - 24f) d'un jeu de données de commande dont le contenu est prévu comme critère de sélection du groupe (21) approprié de jeux de données de commande et/ou du jeu de données de commande (21a) approprié contiennent respectivement une valeur de référence valide pour le jeu de données de commande concerné et que les champs de caractéristiques (24a - 24f) dont le contenu n'est pas prévu comme critère de sélection du groupe (21) approprié de jeux de données de commande et/ou du jeu de données de commande (21a) approprié contiennent respectivement la valeur zéro.

10. Dispositif selon au moins l'une des revendications 1 à 9, **caractérisé en ce qu'**au moins un champ de caractéristiques (24c, #DF_GG_MAX) est prévu pour indiquer le nombre de rapports de la boîte de vitesses étagée (3).

11. Dispositif selon au moins l'une des revendications 1 à 10, **caractérisé en ce qu'**au moins un champ de caractéristiques (24d, #DF_GV) est prévu pour indiquer la variante de boîte de vitesses (OD, DD) de la boîte de vitesses étagée (3) du point de vue de la démultiplication (i < 1) ou (i = 1) du rapport le plus élevé.

12. Dispositif selon au moins l'une des revendications 1 à 11, **caractérisé en ce qu'**au moins un champ de caractéristiques (24e, #DF_SV) est prévu pour l'identification dune variante spéciale de la boîte de vitesses étagée (3).

13. Dispositif selon au moins l'une des revendications 1 à 12, **caractérisé en ce qu'**au moins un champ de caractéristiques (24f, #DF_DYN_SWITCH) est prévu pour l'identification de jeux de données de commande (21a - 21h) pour une permutation entre plusieurs jeux de données de commande (21a - 21h) qui peut être déclenchée manuellement et/ou automatiquement pendant le fonctionnement du véhicule automobile.

14. Dispositif selon la revendication 13, **caractérisé en ce que** le champ de caractéristiques pour les permutations pendant le fonctionnement (24f, #DF_DYN_SWITCH) comprend plusieurs bits de données, un critère de permutation étant associé à chaque bit de données, et si le jeu de données de commande (21a - 21h) concerné est valide pour un critère de permutation satisfait, le bit de données contient la valeur 1 et si le jeu de données de commande concerné est valide pour un critère de permutation non satisfait, il contient la valeur 0.

15. Dispositif selon la revendication 14, **caractérisé en ce que** le champ de caractéristiques pour les permutations pendant le fonctionnement (24f, #DF_DYN_SWITCH) contient au moins un bit de données pour une permutation déclenchable manuellement au moyen d'un commutateur externe (signal de commande : z_extern_switch) pouvant être actionné par le conducteur.

16. Dispositif selon la revendication 14 ou 15, **caractérisé en ce que** le champ de caractéristiques pour les permutations pendant le fonctionnement (24f, #DF_DYN_SWITCH) contient au moins un bit de données pour une permutation déclenchable manuellement entre un fonctionnement normal et un fonctionnement en transport de charges lourdes du véhicule automobile (signal de commande : z_schwertrans_switch).

17. Dispositif selon au moins l'une des revendications 14 à 16, **caractérisé en ce que** le champ de caractéristiques pour les permutations pendant le fonctionnement (24f, #DF_DYN_SWITCH) contient au moins un bit de données pour une permutation déclenchable par le conducteur au moyen d'un signal de rétrogradation (signal de commande : z_KD) pouvant être déclenché par un actionnement de la pédale des gaz.

18. Dispositif selon l'une des revendications 14 à 17, **caractérisé en ce que** le champ de caractéristiques pour les permutations pendant le fonctionnement (24f, #DF_DYN_SWITCH) contient au moins un bit de données pour une permutation automatique par une détection par des capteurs de la position de commutation respective de la boîte de transfert (signal de commande : z_VTG_geschaltet) .

19. Dispositif selon l'une des revendications 14 à 18, **caractérisé en ce que** le champ de caractéristiques pour les permutations pendant le fonctionnement (24f, #DF_DYN_SWITCH) contient au moins un bit de données pour une permutation automatique par une détection de la masse du véhicule.

20. Dispositif selon l'une des revendications 14 à 19, **caractérisé en ce que** le champ de caractéristiques pour les permutations pendant le fonctionnement (24f, #DF_DYN_SWITCH) contient au moins un bit de données pour une permutation automatique par une détection de trajet en col (signal de commande : z_Passfahrt).
